# EUROPÄISCHE PATENTANMELDUNG

(11) **EP 1 990 522 A2**
(43) Veröffentlichungstag der Anmeldung: **12.11.2008**
(21) Anmeldenummer: 08007610.2
(22) Anmeldetag: 18.04.2008
(51) Int. Cl.: F02D 19/08, F02D 41/00

(54) **Nachrüstbares Kraftstoff-Einspritzsteuersystem zum zusätzlichen Betreiben des Benzin-Verbrennungsmotors mit einem Benzin-/Alkoholgemisch**

(30) Priorität: 18.04.2007 DE 202007005693 U
(71) Anmelder: Autordrom Handelsgesellschaft mbH, 24558 Henstedt-Ulzburg (DE)
(72) Erfinder: Diehn, Stephan, 24558 Henstedt-Ulzburg (DE)
(74) Vertreter: Auerbach, Bettina

(57) **Zusammenfassung**

Nachrüstbares Kraftstoff-Einspritzsteuersystem zum zusätzlichen Betreiben eines Benzin-Verbrennungsmotors ( 5) mit einem Gemisch aus Benzin und Alkohol, wobei dieses nachrüstbare Einspritzsteuersystem einen zum Messen des Alkoholanteils im Kraftstoff-/Alkoholgemisch dienenden Sensor (A) aufweist, das nachrüstbare Einspritzsystem einen zum Messen der Motortemperatur dienenden zusätzlichen Sensor (T) aufweist, das nachrüstbare Einspritzsteuersystem ein zum Auslesen und Verarbeiten von ausgewählten elektrischen Impulsen des vorhandenen Motorsteuergerätes und zum Erfassen und Verarbeiten der vom Sensor A und Sensor T ermittelten Daten dienendes zusätzliches Steuermodul (1) aufweist und dieses zusätzliche Steuermodul (1) mit dem vorhandenen Motorsteuergerät (2) des Benzin-Verbrennungsmotors steuerungsseitig zur Einflussnahme der Einspritzzeit gekoppelt ist.

Vorrichtungen dieser Art werden vor allem in der Kfz-Branche zum Umrüsten von Benzinmotoren für das gleichzeitige Betreiben mit einem Benzin-/Alkoholgemisch benötigt.

## Beschreibung

Die Erfindung betrifft ein nachrüstbares Kraftstoff-Einspritzsteuersystem zum zusätzlichen Betreiben eines Benzin-Verbrennungsmotors mit einem Benzin-/Alkoholgemisch.
Vorrichtungen dieser Art werden vor allem in der Kfz-Branche zum Umrüsten von Benzinmotoren für das gleichzeitige Betreiben mit einem Benzin-/Alkoholgemisch benötigt

Nachrüstbare Vorrichtungen zur Steuerung des Motorbetriebes eines Benzinmotors sind aus dem Stand der Technik nicht bekannt.
Bekannt ist gemäß der DE 40 25 112 C2 eine Steuerungen zum Betreiben eines Alkoholmotors mit einem Anlasser, einer Heizeinrichtung zur Beheizung des Alkoholkraftstoffs vor dem Start, mit einem Sensor zur Erfassung der Motortemperatur und mit einer Steuereinrichtung, die in Abhängigkeit der Motortemperatur die Heizeinrichtung betreibt. Durch einen Sensor zur Erfassung der Alkoholkonzentration im Kraftstoff und einer Berechnungseinheit, wird bei fehlender Startfähigkeit des Motors in Abhängigkeit von der Alkoholkonzentration und der Motortemperatur eine zum Erreichen der Startfähigkeit des Motors erforderliche Heizenergie zur Steigerung der Verdampfung des Kraftstoffs berechnet und die entsprechende Heizdauer bestimmt. Es handelt sich hierbei lediglich um eine Starthilfe für einen Motor, welcher mit Alkohol versehenen Kraftstoff verwendet. Diese Vorrichtung dient lediglich der Verbesserung des Anlassverhaltens eines mit einen Benzin-Alkoholgemisch betriebenen Motors, da das Anlassverhalten eines kalten Motors oft sehr schwierig ist und maßgeblich von der Motortemperatur abhängt. Es besteht jedoch mit dieser technischen Lösung nicht die Möglichkeit, auf den laufenden Steuerungsbetrieb des Motors bei sich ändernden Alkoholkonzentrationen im Kraftstoffgemisch einwirken zu können.

Es ist deshalb Aufgabe der Erfindung, die Mängel des bekannten Standes der Technik zu überwinden und eine Lösung zu schaffen, mit der es möglich ist, eine optimale Betriebsweise eines mit einem Alkoholanteil im Kraftstoff betriebenen Motors zu realisieren, Dabei soll durch eine nachrüstbare technische Lösung geschaffen werden, mit deren Hilfe die Umstellung eines üblichen Benzinmotors auf das Betreiben mit einem Benzin-Alkoholgemisch möglich wird, wobei auf die Vorteile der bereits vorhandenen Motorsteuerung nicht verzichtet werden soll und ein optimaler Betreibemodus für den vorhanden Motor unter Einhaltung aller geforderten Nonnen für das Betreiben eines Verbrennungsmotors in einem Kfz erreicht werden soll.

Erfindungsgemäß wird die Aufgabe durch die Merkmale des Anspruchs 1 gelöst. Die vorteilhaften Ausgestaltungen sind in den Unteransprüchen beschrieben.

Danach besteht ein nachrüstbares Kraftstoff Einspritzsteuersystem zum zusätzlichen Betreiben des Benzin-Verbrennungsmotors mit Alkohol, aus einem zum Messen des Alkoholanteils im Kraftstoff-/Alkoholgemischs dienenden Sensor, welcher steuerungsseitig mit der vorhandenen Motorsteuerung des Benzin-Verbrennungsmotors über ein zusätzliches Steuermodul gekoppelt ist.
Ein weiterer Sensor zur Ermittlung der momentanen Motortemperatur steht auch mit dem zusätzlichen Steuermodul, welches Bestandteil des nachrüstbaren Kraftstoff-Einspritzsteuersystem ist, steuerungsseitig in Verbindung und liefert die ermittelten Daten direkt an dieses zusätzliche Steuerungsmodul. Dieses Steuermodul wertet über einen integrierten und vorprogrammierten Rechner die Daten zur Einspritzventilsteuerung der vorhanden Motorsteuerung in Verbindung mit den gelieferten Daten der Sensoren A und T aus und liefert ein Steuersignal direkt an die Einspritzventile zur Regulierung der Einspritzzei.
Mit diesen zusätzlichen Sensorparametern wird durch das nachrüstbare Kraftstoff Einspritzsteuersystem direkt auf die Steuerung der Einspritzventile Einfluss genommen.

Durch das zusätzliche Integrieren und ständige Auswerten der Motortemperaturermittlung durch den Sensor T wird gleichzeitig auch das Betreibeverhalten des Motors während des Kaltstarts, des Warmlaufs und des Lastbetriebs berücksichtigt, da in Abhängigkeit von der Motortemperatur und der ermittelten Kraftstoffqualität das von der original eingebauten Motorsteuerung ermittelte Einspritzsignal von dem nachrüstbaren Kraftstoff Einspritzsteuersystem mittels eines Rechnerbausteins mit integrierten Berechnungsvorgaben beeinflusst und verändert wird.

Eine weitere Variante zum zusätzlichen Betreiben eines Benzin-Verbrennungsmotors mit einem Benzin-/Alkoholgemisch ist die Anordnung eines zusätzlichen manuellen Reglers beim nachrüstbaren Kraftstoff-Einspritzsteuersystem anstelle des Alkoholsensors A. Über diesen kann aufgrund der mindestens 2 Schalterstellungen manuell die vorhandene Gemischbildung voreingestellt werden. Damit erfolgt die Einflussnahme auf das zusätzliche Steuermodul nur im Falle der Gemischbildung Kraftstoff-/Alkohol, wobei nicht nur Gemischbildung ja/nein (I/O), sondern auch verschiedene Gemischbildungen als Schalterstellung und im zusätzlichen Steuermodul voreingestellt sein können. Im Steuermodul selbst sind wenigstens für wenigstens für den Kaltstart, den Warmlauf und den Lastlauf Programmstufen vorprogrammiert, auf welche durch die Lieferung der Daten des Temperatursensors in Abhängigkeit von den aktuellen Motortemperaturdaten für die Berechnung der Steuerungsdaten für die Einspritzventilsteuerung mit zurück gegriffen wird.

Um die Abgaswerte in der Kaltstartphase zu verbessern, ist es auch möglich, dass das nachrüstbare Einspritzsystem eine Ansauglufterwärmung aufweist. Die Vorrichtung zur Erwärmung der Ansaufluft ist dabei vorzugsweise im Ansaugbereich angeordnet.

Die Vorteile der erfindungsgemäßen Lösung bestehen zusammengefasst in der nun verfügbaren Lösung, einen vorhandenen Benzinmotor nachträglich für das Betreiben mit einem Benzin-Alkoholgemisch umzurüsten und dabei eine effiziente Fahrweise des Motors zu erreichen ohne dabei auf optimale Abgaswerte, die den geforderten Normen entsprechen, nicht verzichten zu müssen. Somit hat die Betriebsweise des Motors mit einem Benzin-Alkoholgemisch keinen negative Auswirkung auf die Dauer der Motorleistung, sofern die kraftstoffführenden Teile für den Alkoholbetrieb geeignet ausgelegt sind.. Durch die saubere Verbrennung von Alkohol und die Veränderung des Kraftstoff-Luftgemischs kann die Abgastemperatur gesenkt werden.

Die Erfindung soll nachstehend an einem Ausführungsbeispiel näher erläutert werden.
In der beigefügten Zeichnung zeigen:
- Fig. 1:: schematische Übersicht über das Zusammenwirken der Module des nachrüstbaren Kraftstoffeinspritzsystems mit Alkoholsensor,
- Fig. 2 und: schematische Übersicht über das Zusammenwirken der Module des nachrüstbare Kraftstoffeinspritzsystems mit Regler
- Fig. 3: Übersichtsdiagramm zu Heizwerten verschiedener Kraftstoffgemische.

### Ausführuagsbeispiel 1:

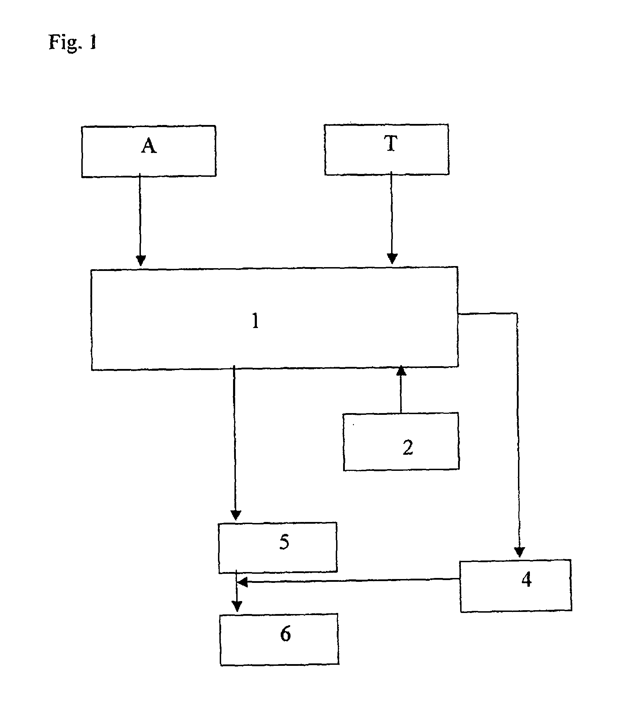

Gemäß der Figur 1 weist ein Kraftstoff- Einspritzsteuersystem zum nachträglichen Einbau und in Ergänzung zu einer vorhandenen Motorsteuerung 2 für das zusätzliche Betreiben dieses Motors 6 mit einem Benzin-/Alkoholgemisch einen zum Messen des Alkoholanteils im Kraftstoff-/Alkoholgemisch dienenden Sensor A, einen zum Messen der Motortemperatur dienenden zusätzlichen Sensor T, ein zum Auslesen und Verarbeiten von ausgewählten elektrischen Impulsen des vorhandenen Motorsteuergerätes 2 und zum Erfassen und Verarbeiten der vom Sensor A und Sensor T ermittelten Daten dienendes zusätzliches Steuermodul 1 auf, wobei dieses zusätzliche Steuermodul 1 mit dem vorhandenen Motorsteuergerät 2 des Benzin-Verbrennungsmotors 6 steuerungsseitig über die Einflussnahme der Einspritzzeit gekoppelt ist.

Das Messen des Alkoholanteils im Benzingemisch oder im Benzin-/Alkoholgemisch erfolgt dauerhaft zyklisch.
Der weitere Sensor T ermittelt ständig die vorhandene Motortemperatur und liefert diese Daten ebenfalls an das zusätzliche Steuermodul 1. Im Steuermodul 1 selbst sind verschiedene Programmstufen, beispielsweise für den Kaltstart, den Warmlauf und/oder den Lastlauf vorab eingespeichert, auf die durch Erreichen von Signalbereichen der vom Sensor T gelieferten Messwerte automatisch zurückgegriffen wird.

Die ermittelten Messwerte der Sensoren A und T werden zusammen mit den von der vorhandenen Motorsteuerung gelieferten Werten zur Einspritzzeit verglichen, in diesem Zusammenhang neu berechnet und mit den neu berechneten Steuersignalen zu den Einspritzventilen weitergeleitet.

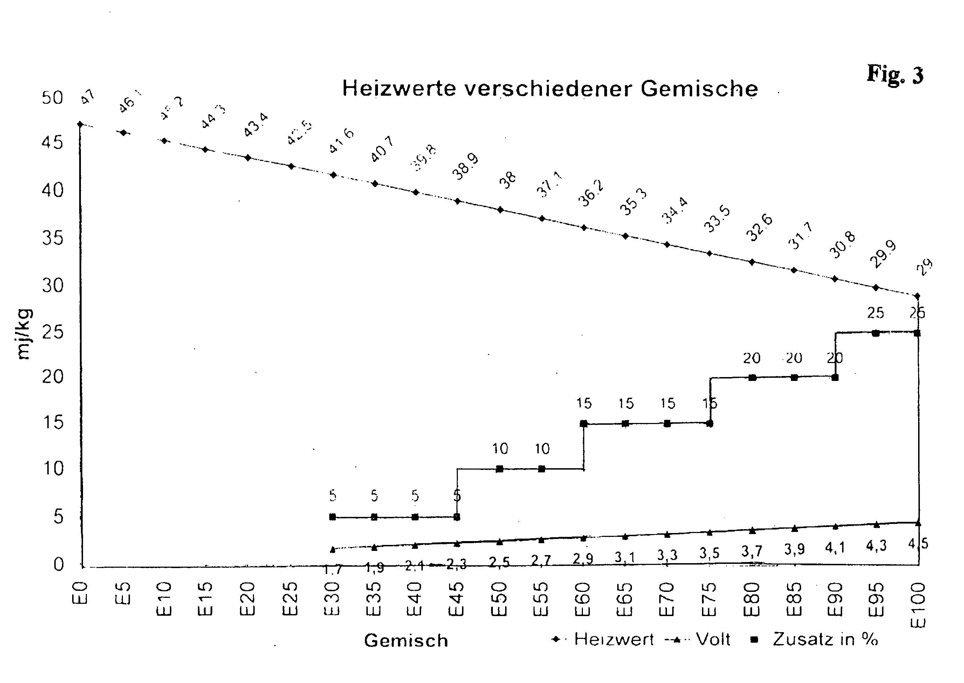

Die der Fig. 3 gezeigten unterschiedlichen Heiz- und Energiewerte der verschiedenen Benzin-/Alkoholgemische zeigen deutlich es beim Betreiben eines Benzinmotors einer genauen Regelung der Einspritzzeit bedarf, um diesen Motor optimal auf diese Energiewerte abzustimmen und betreiben zu können.

Mit dem zyklischen Messen des Alkoholanteils im Benzin-/Alkoholgemisch und dem regelmäßigen Ermitteln und Auswerten der aktuellen Motortemperatur wird eine regelmäßige Anpassung der Einspritzzeit an den momentanen Heizwert des Kraftstoffgemischs sowie unter Beachtung der momentanen Motorbelastung realisiert.
Zur Verbesserung der Abgaswerte besitzt in diesem Ausführungsbeispiel das nachrüstbare Einspritzsystem einen Ansauglufterwärmer 4. Diese Vorrichtung ist vorzugsweise im Ansaugbereich angeordnet und dient vorzugsweise auch der weiteren Verbesserung des Kaltstartverhaltens des Motors.
Mit dieser Ausführungsvariante ist es möglich, einen normale Benzinmotor 6 nachträglich für das optimale Betreiben mit einem Benzin-/Alkoholgemisch umzurüsten.

### Ausführungsbeispiel 2:

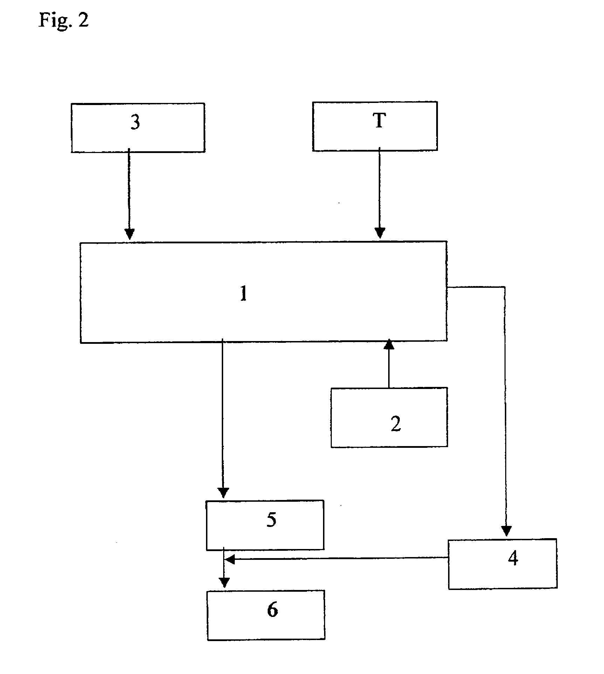

Gemäß der Figur 2 besteht die Möglichkeit der Einflussnahme auf die Einspritzzeit des Benzin-/Kraftstoffgemischs beim Betreiben des Benzin-Verbrennungsmotors 6 mit einem Benzin-/Alkoholgemisch über einen im zusätzlichen Einspritzsteuersystem anstelle des im Ausführungsbeispiel 1 erwähnten Sensors A, angeordneten manuell betätigbaren Regler 3.
Dieser Regler 3 verfügt über wenigstens zwei Stellstufen, der Stufe "0" ohne Alkoholanteil im Benzingemisch und wenigstens einer Stufe "I" mit einem handelsüblichen Alkoholanteil im Benzin-/Alkoholgemisch.

Diese Stufe kann auf grund der vorhandenen verschiedenen handelsüblichen Alkoholanteile im Benzin-/Alkoholgemisch in verschiedene Stellungen des Reglers 3 unterteil sein.
Der manuell eingestellte Regler 3 liefert dieses Signal an das zusätzliche Steuermodul 1 des nachrüstbaren Einspritzsteuersystem.
In der Stellung "0" wird die Einspritzzeit von der vorhandenen Motorsteuer 2 ohne Einflussnahme durch das zusätzliche Kraftstoff-Einspritzsteuersystem geregelt.
In der Stellung I wird der Motorbetrieb über das zusätzliche Kraftstoff-Einspritzsteuersystem geregelt und angesteuert.
Die Regelung und Berechnung der Steuersignale an die Einspritzventile 5 vom zusätzlichen Steuermodul 1 erfolgt wie im Ausführungsbeispiel 1, nur dass keine zyklische Ermittlung des Alkoholanteil über einen Alkoholsensor erfolgt, sondern die Daten von vorgegebenen und über den Regler 3 manuell eingebbaren Benzin-/Alkoholgemisehen erfolgt. Diese Daten sind als Berechnungsgrundlage im zusätzlichen Steuermodul 1 gespeichert und auf diese wird für die Berechnung der Steuersignale für die Einspritzventile 5 im Zusammenwirken mit den aktuell ermittelten Werten der Temperatur des Motors 6 und den erhaltenen Signalen der vorhandenen Motorsteuerung 2 für die Einspritzventile 5 zurückgegriffen.

Zur Verbesserung der Abgaswerte besitzt auch in diesem Ausführungsbeispiel das nachrüstbare Einspritzsystem einen Ansauglufterwärmer 4. Diese Vorrichtung ist vorzugsweise im Ansaugbereich angeordnet.
Durch die manuelle Auswahl eines vorprogrammierten und im Handel üblichen Alkoholanteils im Kraftstoffgemisch über einen Reglers 3 und der zusätzlichen Berücksichtigung von momentan ermittelten Motortemperaturwerten und der damit gekoppelte Einflussnahme auf die Einspritzzeit des Kraftstoffs zur Brennkammer wird eine optimale Betriebsweise des Motors 6 erreicht. Vorteilhaft ist dabei die ständige Ermittlung und Auswertung der Motortemperatur und die damit verbundene Rückkoppelung auf den jeweils vorhandenen Betreibemodus des Motors 6 für die optimale Ermittlung der Einspritzzeit.
Aber auch mit der möglichen Anordnung eines zusätzlichen Ansauglufterwänners 4 können die Abgaswerte optimal beeinflusst und somit im zulässigen Bereich gehalten werden.
Auch mit dieser Ausführungsvariante ist es möglich, einen normalen Benzinmotor 6 nachträglich für das optimale Betreiben mit einem Benzin-/Alkoholgemisch umzurüsten.

### Bezugszeichenliste

- 1: zusätzliches Steuermodul
- 2: vorhandene Motorsteuerung
- 3: Regler
- 4: Ansauglufterwärmer
- 5: Einspritzventile
- 6: Benzin-Verbrennungsmotor
- A: Sensor zum Messen des Alkoholanteils in Kraftstoffgemisch
- T: Sensor zur Ermittlung der Motortemperatur

## Patentansprüche

1. Nachrüstbares Kraftstoff-Einspritzsteuersystem zum zusätzlichen Betreiben eines Benzin-Verbrennungsmotors ( 5) mit einem Gemisch aus Benzin und Alkohol, wobei dieses nachrüstbare Einspritzsteuersystem einen zum Messen des Alkoholanteils im Kraftstoff-/Alkoholgemisch dienenden Sensor (A) aufweist, das nachrüstbare Einspritzsystem einen zum Messen der Motortemperatur dienenden zusätzlichen Sensor (T) aufweist, das nachrüstbare Einspritzsteuersystem ein zum Auslesen und Verarbeiten von ausgewählten elektrischen Impulsen des vorhandenen Motorsteuergerätes und zum Erfassen und Verarbeiten der vom Sensor A und Sensor T ermittelten Daten dienendes zusätzliches Steuermodul (1) aufweist und dieses zusätzliche Steuermodul (1) mit dem vorhandenen Motorsteuergerät (2) des Benzin-Verbrennungsmotors steuerungsseitig zur Einflussnahme der Einspritzzeit gekoppelt ist.

2. Nachrüstbares Kraftstoff-Einspritzsteuersystem zum zusätzlichen Betreiben
des Benzin-Verbrennungsmotors mit einem Benzin-/Alkoholgemisch nach dem Anspruch 1, **dadurch gekennzeichnet, dass** das nachrüstbare Kraftstoff-Einspritzsteuersystem anstelle des Sensors A einen zur Voreinstellung der Gemischart manuell betätigbaren und mit mindestens 2 Reglerstellungen ausgestatteten Regler (3), welcher mit dem zusätzlichen Steuermodul (1) steuerseitig gekoppelt ist, aufweist.

3. Nachrüstbares Kraftstoff-Einspritzsteuersystem zum zusätzlichen Betreiben des Benzin-Verbrennungsmotors mit einem Benzin-/Alkoholgemisch nach einem der Ansprüche 1 und 2, **dadurch gekennzeichnet, dass** das nachrüstbare Einspritzsystem einen Ansauglufterwärmer (4) aufweist.
